(19)

Europäisches
Patentamt
European
Patent Office
Office européen
des brevets

(11) **EP 4 538 922 A1**

(12) **EUROPEAN PATENT APPLICATION**

(43) Date of publication:
**16.04.2025 Bulletin 2025/16**

(21) Application number: **23202679.9**

(22) Date of filing: **10.10.2023**

(51) International Patent Classification (IPC):
*G06F 30/23* [(2020.01)]      *G06F 30/28* [(2020.01)]
*G06F 111/08* [(2020.01)]     *G06F 111/10* [(2020.01)]
*G06F 113/06* [(2020.01)]     *G06F 119/14* [(2020.01)]

(52) Cooperative Patent Classification (CPC):
**G06F 30/23; G06F 30/28;** G06F 2111/08;
G06F 2111/10; G06F 2113/06; G06F 2119/14

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **VESTAS WIND SYSTEMS A/S**
**8200 Aarhus N (DK)**

(72) Inventors:
- **Violato, Gustavo Oliveira**
  **8240 Risskov (DK)**
- **Overgaard, Nikolaj Sig**
  **8270 Højbjerg (DK)**
- **Ormel, Frank**
  **8660 Skanderborg (DK)**

(74) Representative: **Vestas Patents Department**
**Hedeager 42**
**8200 Aarhus N (DK)**

(54) **DETERMINATION OF AN UNCERTAINTY OF AN AEROELASTIC MODEL OF A WIND TURBINE**

(57)    The present disclosure pertains to the field of aeroelastic modelling of a wind turbine and to determining the validity of an aeroelastic model within a specific application domain. A method for determining a model form uncertainty of an aeroelastic model of a wind turbine is provided, the method comprising obtain measured data sets of operational data of wind turbines and for each measured data set, obtain a model simulation data set of the operational data set using the aeroelastic model of the wind turbine. The model simulation data set and the measured data set are compared to determine a model form uncertainty. By use of a regression model is the model form uncertainty for a quantity of interest determined over an expanded calculation domain, over which an uncertainty acceptance value can be obtained.

Fig. 2

EP 4 538 922 A1

**Description**

FIELD OF THE INVENTION

The present disclosure pertains to the field of aeroelastic modelling of a wind turbine, and in particular to determining the validity of an aeroelastic model within a specific application domain.

BACKGROUND OF THE INVENTION

When designing new models of wind turbine, it is important to design all possible configurations of the wind turbine to be able to withstand the loads that the wind turbine is expected to face during its working lifetime. Performing simulations and modelling of wind turbine configurations has become an important aspect of this design process, and the results of the modelling informs the design of key components. Once a wind turbine variant has been modelled and simulations appears to describe well the performance of the wind turbine, further testing using prototyping is normally performed prior to certification.

With the increasing number of turbine variants it becomes a challenge that almost every design variant would require one prototype to comply with certification practise. This is economically very expensive and introduces time delays in the process of building new turbine variants.

According to the current version of the standard IECRE OD-501 a prototype test may be avoided only for very small changes from a certified wind turbine variant.

At the same time, aeroelastic modelling of wind turbines has become very sophisticated and some aeroelastic models are believed to be so precise that a certification process can rely solely on simulations of the aeroelastic model without a need for prototype validation. However there is a need in the art to provide solutions to judge when an aeroelastic model for a design variant is sufficiently precise to be able to base a certification on the simulation results using the aeroelastic model and when further investigations, e.g. prototyping, is needed.

Not needing to build a prototype for testing is naturally cost-saving, but it additionally saves materials, energy consumption and reduces the time to market. These aspects are very significant for a large structure as a wind turbine, and therefore of benefit also for environmental reasons.

It is against this background that the invention has been devised.

SUMMARY OF THE INVENTION

It is an object of the invention to provide improved ways of determining a validity domain of an aeroelastic model, hereunder to provide improved ways of determining a model form uncertainty where a lack of knowledge of the underlying physics influences the accuracy of the aeroelastic model. Advantageously a validity domain of an aeroelastic model is determined which support taking into account more types of uncertainties.

Accordingly, in a first aspect, there is provided a method for determining a model form uncertainty of an aeroelastic model of a wind turbine, the aeroelastic model being arranged to determine a set of quantities of interest based on a set of design parameters and operational conditions, the method comprising:

obtain measured data sets of operational data of a plurality of wind turbines and associated operational conditions of each wind turbine of the plurality wind turbines;

for each measured data set, obtain a model simulation data set of the operational data set using the aeroelastic model of the wind turbine and the associated operational conditions as the operational conditions;

compare the model simulation data set and the measured data set and determine a model form uncertainty for the set of design parameters and operational conditions for a quantity of interest;

based on a plurality of measured and simulated data sets, determine a model form uncertainty for the quantity of interest over a calculation domain, the calculation domain being defined by the set of design parameters and operational conditions of the wind turbines;

based on a regression model determine the model form uncertain for the quantity of interest over an expanded calculation domain;

obtain uncertainty acceptance values defining a range of model form uncertainty values and associated uncertainty level for a quantity of interest;

associate each data point in the expanded calculation domain with an uncertainty level based on the uncertainty acceptance values.

The method beneficially utilizes that by comparing measured data for a plurality of wind turbines with simulated data for the modelled wind turbines of the same wind turbines the model form uncertainty for a quantity of interest can precisely be estimated over a calculation domain defined by the design parameters, the operational conditions and the quantities of interest. A regression model is used to expand the calculation domain to include the model form uncertainty for a quantity of interest for a wind turbine with design parameters on which measured data is not available. The regression is setup to determine or predict the model form uncertainty for a quantity of interest on which measured data is not available. An uncertainty level of simulated data obtained by use of the aeroelastic model can thereby be determined.

By obtaining design parameters and operational conditions for a wind turbine variant and obtaining a model simulation of the quantity of interest using the aeroelastic model of the wind turbine variant, a validity domain in the form of a model form uncertainty associated with the quantity of interest of the wind turbine variant can be obtained and the uncertainty acceptance level of the quantity of interest of the wind turbine variant can be determined. In this manner it is possible to determine whether or not further investigations, e.g. building a prototype of a wind turbine variant is needed in order to obtain certification of the wind turbine.

Typically a large number of quantities of interest are simulated for design climates. The operational conditions and the specific quantities of interest are normally defined in technical standards used in a certification process.

Beneficially a validity domain is obtained for a combined model uncertainty is determined to ensure that further uncertainties are included in the obtained uncertainty for the quantity of interest. In particular an input uncertainty from the uncertainty of the design parameters or other physical quantities such as sensor data and/or a numerical uncertainty from the uncertainty of the discretization of either time or space dimensions in the aeroelastic model may be combined with the model form uncertainty to determine a combined model uncertainty.

According to a further aspect of the invention, there is provided a computer program comprising instructions which, when the program is executed by a computer, cause the computer to carry out the steps of the method described above.

The computer program product may be provided on a computer readable storage medium or being downloadable from a communication network. The computer program product comprises instructions to cause a data processing system, e.g. in the form of a controller, to carry out the instruction when loaded onto the data processing system.

In general the aspects of the invention may be combined and coupled in any way possible within the scope of the invention. These and other aspects, features and/or advantages of the invention will be apparent from and elucidated with reference to the embodiments described hereinafter.

BRIEF DESCRIPTION OF THE DRAWINGS

Embodiments of the invention will be described, by way of example only, with reference to the drawings, in which

Fig. 1 illustrates, in a schematic view, a wind turbine;
Fig. 2 schematically shows the general concept of an aeroelastic computational model of a wind turbine; and
Fig. 3 illustrates a diagram of steps performed in order to determine the model form uncertainty.

DESCRIPTION OF EMBODIMENTS

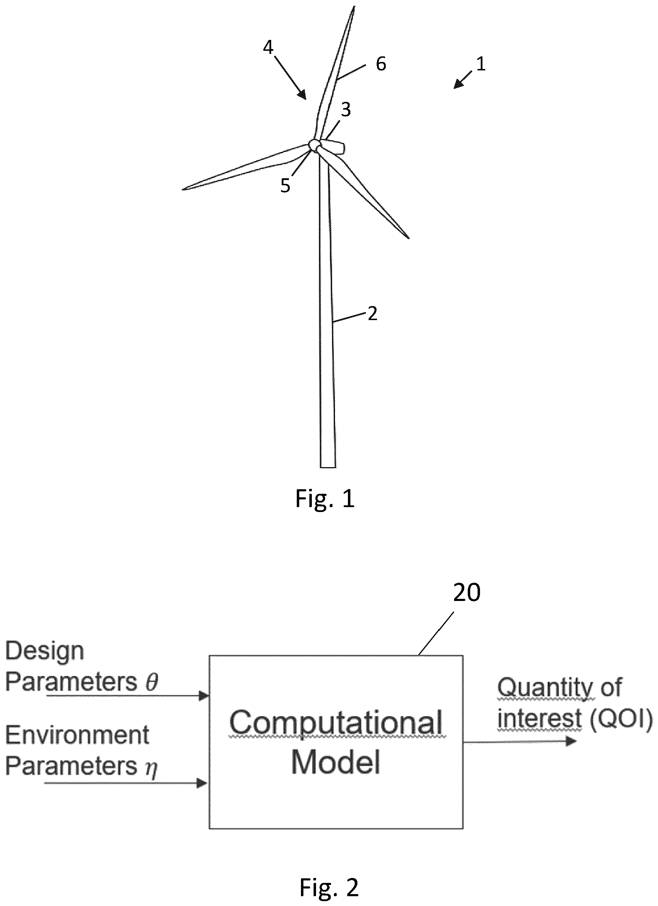

Figure 1 illustrates, in a schematic view, an example of a wind turbine 1. The wind turbine 1 includes a tower 2, a nacelle 3 disposed at the apex of the tower, and a rotor 4 operatively coupled to a generator housed inside the nacelle 3. In addition to the generator, the nacelle houses miscellaneous components required for converting wind energy into electrical energy and various components needed to operate, control, and optimize the performance of the wind turbine 1. The rotor 4 of wind turbine includes a central hub 5 and a plurality of blades 6 that project outwardly from the central hub 5. In the illustrated embodiment, the rotor 4 includes three blades 6, but the number may vary. Moreover, the wind turbine comprises a control system. The control system may be placed inside the nacelle or distributed at a number of locations inside (or externally to) the turbine and communicatively connected. The rotor blades are pitch-adjustable. The rotor blades can be adjusted in accordance with a collective pitch setting, where each of the blades are set to the same pitch value. In addition to that, the rotor blades are adjustable in accordance with individual pitch settings, where each blade may be provided with an individual pitch setting.

The rotor blades 6 are mechanically connected to an electrical generator via a gearbox. In direct drive systems, and other systems, the gear box may not be present. The mechanical connection coupling the rotor and the electrical generator is typically referred to as the drivetrain. The electrical power generated by the generator is injected into an electrical grid via an electrical converter. The electrical generator and the converter may be based on a full-scale converter (FSC) architecture or a doubly fed induction generator (DFIG) architecture, but other types may be used. The electrical components of the generator and the converter, possibly including further electrical components is typically referred to as he electrical power system.

Figure 2 schematically shows the general concept of an aeroelastic computational model of a wind turbine. A number of design parameters (represented by a vector $\theta$, or set of design parameters) describing the system of interest and a number of environmental parameters or operational conditions (represented by a vector $\eta$) describing the surrounding environment are input to the aeroelastic computational model 20 of a wind turbine which then simulate a given physical quantity of interest (QOI). By running a number of calculations of various quantities of interests under specified environmental conditions a simulation of how a turbine performs can be made. Embodiments of the present invention provide a way of determining whether or not the simulation based on the aeroelastic is sufficiently precise or trustworthy so that building a turbine design variant and put it into operation without prototyping can safely be done.

As an example, the set of design parameters may comprise blade length, blade stiffness and blade weight. The set of environmental parameters / operational conditions may comprise wind speed, wind direction and air density. The resulting quantity of interest may be the blade root moment. For a real model a high number of other/further design parameters and operational condition parameters are typically used to simulate a plurality of QOIs, as is known to the skilled person.

The aeroelastic model is a conceptual, mathematical and numerical representations of the physical phenomena needed to represent specific real-world conditions and scenarios. Thus, the model includes the geometrical representation, governing equations, boundary conditions and initial conditions, loadings, constitutive models and related material parameters, spatial and temporal approximations and numerical solution algorithms. The aeroelastic model may in general be a physics-based structural model of the wind turbine, such as a wind turbine model based on blade element momentum theory (BEM) which models the rotor aerodynamic, and a structural model of the turbine and a control system.

A combined model uncertainty for a simulated QOI can be set as a combination of different sources.

A main source is the model form uncertainty, which is assigned to the uncertainty of the model's structure. This uncertainty arises from the assumptions made in the modelling of the physics of the system, or which arises from ignorance of physical phenomena affecting the real system.

A further relevant source of uncertainty is the input uncertainty. This is the uncertainty from not knowing the design parameters perfectly well or not consistently calculating such inputs when different users of the model operate it. For example physical dimensions can vary within design tolerances. The input uncertainty also includes uncertainty on measured experimental conditions, i.e. uncertainty on sensor readings.

A further relevant source of uncertain is the numerical uncertainty. This is the uncertainty from inevitable discretization of either time or space dimensions needed to make a computer implementation of continuous physical systems. For example variations in discretized wind speed in the simulation may not exactly reflect the real wind speed variations.

The input uncertainty and the numerical uncertainty can be estimated with expert judgement and numerical methods. The model form uncertainty can be estimated by comparing a computational model simulations with measured data while considering the uncertainties associated with each of them for a given intended use case.

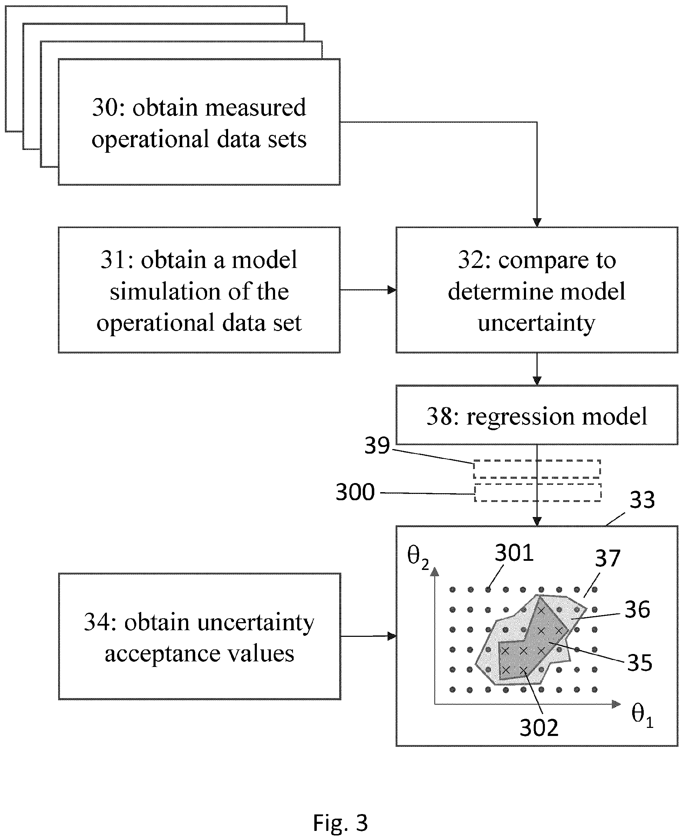

Figure 3 illustrates steps performed in order to determine the validity domain of an aeroelastic model, hereunder to determine the model form uncertainty in a manner which can be beneficial for determining whether or not a wind turbine variant can fulfil certification requirement without a need for building a prototype.

In a prior set of steps, an aeroelastic model 20 has been developed based on a set of design parameters, $\theta$, and a set of operational parameters defining an operational condition, $\eta$, to determine a set of quantities of interest (QOI). Development of an aeroelastic model is within the abilities of a skilled person or team of skilled persons.

In step 30, measured data sets of operational data of a plurality of wind turbines and associated operational conditions of each wind turbine of the plurality wind turbines is obtained. In this step, a high number of measured operational data sets are beneficially obtained. The measured data sets are data obtained from operating wind turbines in production and comprises recorded sensor data of both quantities of interest and operational conditions.

In step 31, for each measured data set 30, a model simulation data set is obtained. The model simulation data is obtained using the aeroelastic model 20 of the wind turbine and the associated operational conditions as the operational conditions. In this manner a calculation of the quantity of interest is done using the aeroelastic model with the design parameters of the turbine and the measured operational conditions. The quantity of interest of the real turbine and of the corresponding simulated turbine are thereby determined.

As a simplified example, the set of design parameters may comprise blade length, blade stiffness and blade weight. The set of environmental parameters / operational conditions may comprise wind speed, wind direction and air density. The resulting quantity of interest may be the blade root moment.

In step 32, the model simulation of the operational data set and the measured operational data set are compared and a model form uncertainty for the quantity of interest for the set of design parameters and operational conditions is determined. Based on a plurality of data sets, a model form uncertainty over a calculation domain is determined, the calculation domain being defined by the set of design parameters and the operational conditions of the wind turbines. Each point in the calculation domain represents a value where a model comparison has been made for a turbine included in plurality of wind turbines where measured data sets of operational data are obtained. The data points of the calculation domain are marked with crosses 302. The comparison of the model simulation of the operational data set and the measured operational data set can be made in different ways. For example, a statistical variable of measured quantity of interest and a simulated quantity of interest can be compared, e.g. mean values and a standard deviations are compared, other types of comparisons can be done by use of different hypothesis tests. Also a distribution of a quantity of interest obtained by the model simulation of the operational data set and the measured operational data can be compared, e.g. by use of probability density functions.

For example, in a simplified manner, for a given wind turbine type, the measured blade root moment and the predicted blade root moment can be obtained for a variety of operational conditions. From statistical analysis of the results of this comparison an uncertainty level can be determined. For example, it can be determined that at a given wind speed, the blade root moment can be determined with an uncertainty of 2%, whereas for another wind speed, the blade root moment can be determined with an uncertainty of 5%. Due to that the comparison has been made for a number of operational conditions and for a number of different design parameters, the model form uncertainty can be determined over the calculation domain. An example of a calculation domain for a given quantity of interest is illustrated in 33 for the design parameters $\theta_1$ and $\theta_2$, where the uncertainty is the value of each data point. As an example the uncertainty for the QOI blade root moment is mapped for the blade length and hub height.

Figure 3 further illustrates use of a regression model 38 to determine the model form uncertainty for the quantity of interest over an expanded calculation domain. The regression model takes as input the model form uncertainty obtained for a quantity of interest for a set of design parameters and operational conditions comprised in the measured data set to include further data points in the expanded calculation domain. The data points further included in the expanded calculation domain are marked with dots 301. In this manner the expanded calculation domain includes model uncertainty values for a QOI for design parameters of wind turbines not included in the plurality of wind turbines but determined from use of the regression model.

In step 34 model form uncertainty acceptance values are obtained. An uncertainty acceptance value is defining a range of model form uncertainty values and associated uncertainty level. For example, for an uncertainty value below 1% a low uncertainty 35 is defined, for an uncertainty value between 1% and 3% an acceptable uncertainty 36 is defined and above 3% an unacceptable uncertainty 37 is defined.

By associating each data point in the expanded calculation domain with the uncertainty level based on the uncertainty acceptance values, zones in expanded calculation domain can be associated with a given uncertainty level, as shown in 33 with the contour lines.

For a wind turbine design variant, that is a wind turbine defined by a given set of design parameters, a calculation can be made to determine the model form uncertainty associated with a selected set of design parameters and operational conditions defining the wind turbine variant.

By performing the general steps of:

- obtaining design parameters and operational conditions for the wind turbine variant;
- obtain a model simulation of the quantity of interest using the aeroelastic model of the wind turbine variant;
- obtain a model form uncertainty associated with the quantity of interest of the wind turbine variant;

the uncertainty acceptance level of the design parameters of the wind turbine variant of the quantity of interest of the wind turbine variant can thereby be determined.

Thus for a wind turbine variant defined by a selected set of design parameters comprising ($\theta_1$, ..., $\theta_n$) and operational conditions a model simulation of a given quantity of interest can be made using the aeroelastic model. Based the selected set of design parameters and operational conditions the model form uncertainty and the uncertainty level are determined.

Wind turbine variants with design parameters and operational conditions in the region 35 can be tested using the aeroelastic model with a low uncertainty, variants with design parameters in the region 36 can tested using the aeroelastic model with an acceptable uncertainty, and variant outside these regions cannot be tested based on the aeroelastic model as the uncertainty level 37 is unacceptable.

In this manner, given thresholds for acceptable model uncertainty, it is possible to generate regions of the design parameter space where it is safe to apply to the aeroelastic model without further recurring to validation tests. It can thereby be decided whether or not the wind turbine variant can validly be tested using the aeroelastic model or not. In some situations building a prototype can thereby be avoided.

The regression model 38 is used to determine the model form uncertainty values in the expanded calculation domain. The regression model may include a term to reduce the model form uncertainty values as a function of a difference between design parameters of wind turbines included in the plurality of wind turbines and design parameters not included in the plurality of wind turbines. The regression model may alternatively or additionally include a term to reduce the model form uncertainty values as a function of a difference between operational conditions of wind turbines included in the plurality of wind turbines and operational conditions not included in the plurality of wind turbines.

Different types of regression models may be used. In an embodiment, the regression model is a linear regression model.

Such a regression model may be obtained by finding a set of parameters (a, b, c, ...) which maps an input set of design parameters to a model uncertainty value, U. This may in an example be expressed as:

$$U = a \cdot \theta_1 + b \cdot \theta_2 + c \cdot \theta_3 + \dots$$

Where the set of parameters (a, b, c, ...) are determined, e.g. by an optimization method based on known uncertainty values, U, for specific design parameters, e.g. as obtained from the comparison step 32.

Figure 3 further illustrates, that in addition to determining the model form uncertainty, the determination of the model form uncertainty further includes an input uncertainty from the uncertainty of the design parameters. In this manner a validity domain of a combined model uncertainty is obtained. The combined model uncertainty being a combination of the model form uncertainty and the input uncertainty.

The input uncertainty 39 arise from the uncertainty of the design parameters in a determination of the model uncertainty. The input uncertainty can be determined from a statistical analysis of design parameters of at least a subset of the plurality of wind turbines. For example a blade with a length of e.g. 54 meters may vary between 53.8 m to 54.2 m. The input uncertainty can in an embodiment be added to the model uncertainty obtained from the model form uncertainty resulting from the comparison of measurements and calculations in 32.

The input uncertainty may beneficially be implemented as a surrogate model. Where the surrogate model is a predetermined model based on simulations using the aeroelastic model. The surrogate model being determined to output an uncertainty of a quantity of interest based on an input set of design parameters.

The surrogate model may be implemented in the aeroelastic model, so that the output of the aeroelastic model is a simulation which in addition to the quantity of interest also output the uncertainty of the QOI in view of the design parameters.

Figure 3 further illustrates to also include a numerical uncertainty 300 from the uncertainty of the discretization of either time or space dimensions in the aeroelastic model in a determination of the combined model uncertainty. The numerical uncertainty can be determined from a statistical analysis of differences between discretized operational conditions and measured operational conditions of the plurality wind turbines. The numerical uncertainty can in an embodiment be added to the model form uncertainty.

In an embodiment where combined model uncertainty is determined as a combination of the model form uncertainty and at least one of an input uncertainty and a numerical uncertainty, the uncertainty level is adjusted to the combined model uncertainty, so that combined uncertainty acceptance values are obtained which define a range of combined model uncertainty values and associated uncertainty level for a quantity of interest, so that each data point in the expanded calculation domain is associated with an combined uncertainty level based on the combined uncertainty acceptance values.

Example embodiments of the invention have been described for the purposes of illustration only, and not to limit the scope of the invention as defined in the accompanying claims.

## Claims

1. A method for determining a model form uncertainty of an aeroelastic model of a wind turbine, the aeroelastic model being arranged to determine a set of quantities of interest based on a set of design parameters and operational conditions, the method comprising:

   obtain measured data sets of operational data of a plurality of wind turbines and associated operational conditions of each wind turbine of the plurality wind turbines;
   for each measured data set, obtain a model simulation data set of the operational data set using the aeroelastic model of the wind turbine and the associated operational conditions as the operational conditions;
   compare the model simulation data set and the measured data set and determine a model form uncertainty for the set of design parameters and operational conditions for a quantity of interest;
   based on a plurality of measured and simulated data sets, determine a model form uncertainty for the quantity of interest over a calculation domain, the calculation domain being defined by the set of design parameters and the operational conditions of the wind turbines;
   based on a regression model determine the model form uncertainty for the quantity of interest over an expanded calculation domain;
   obtain uncertainty acceptance values defining a range of model form uncertainty values and associated uncertainty level for a quantity of interest;
   associate each data point in the expanded calculation domain with an uncertainty level based on the uncertainty acceptance values.

2. The method according to claim 1 further comprising:

   obtain design parameters and operational conditions for a wind turbine variant;
   obtain a model simulation of the quantity of interest using the aeroelastic model of the wind turbine variant;
   obtain a model form uncertainty associated with the quantity of interest of the wind turbine variant; and
   determine the uncertainty acceptance level of the quantity of interest of the wind turbine variant.

3. The method according to any of the preceding claims, wherein the regression model includes a term to reduce the model form uncertainty values as a function of a difference between design parameters of wind turbines included in the plurality of wind turbines and design parameters not included in the plurality of wind turbines.

4. The method according to any of the preceding claims, wherein the regression model includes a term to reduce the model form uncertainty values as a function of a difference between operational conditions of wind turbines included in the plurality of wind turbines and operational conditions not included in the plurality of wind turbines.

5. The method according to claims 3 or 4, wherein the regression model is a linear regression model.

6. The method according to any preceding claims wherein in addition to determine the model form uncertainty, the determination of the model form uncertainty further includes an input uncertainty from the uncertainty of the design parameters to determine a combined model uncertainty.

7. The method according to claim 6, wherein the input uncertainty is determined from a statistical analysis of design parameters of at least a subset of the plurality of wind turbines.

8. The method according to any of claim 6 or 7, wherein the input uncertainty is determined from a surrogate model.

9. The method according to claim 8, wherein the surrogate model is implemented in the aeroelastic model.

10. The method according to any preceding claims wherein the determination of the combined model uncertainty further includes a numerical uncertainty from the uncertainty of the discretization of either time or space dimensions in the aeroelastic model.

11. The method according to claim 10, wherein the numerical uncertainty is determined from a statistical analysis of differences between discretized operational conditions and measured operational conditions of the plurality wind turbines.

12. A computer program comprising instructions which, when the program is executed by a computer, cause the computer to carry out the steps of the method of any one of the preceding claims.

Fig. 1

Fig. 2

Fig. 3

Europäisches
Patentamt

European
Patent Office

Office européen
des brevets

# EUROPEAN SEARCH REPORT

Application Number

**EP 23 20 2679**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GAMBERINI A ET AL: "Aeroelastic model validation of an Active Trailing Edge Flap System tested on a 4.3 MW wind turbine", JOURNAL OF PHYSICS: CONFERENCE SERIES, vol. 2265, no. 3, 1 May 2022 (2022-05-01), XP020424655, DOI: 10.1088/1742-6596/2265/3/032014 [retrieved on 2022-05-01] * the whole document * * abstract * * tables 1,2,3 * * tables 4,5,6 * * section 3.1 * * section 3.2 * * section 4.2 * | 1-12 | INV. G06F30/23 G06F30/28 ADD. G06F111/08 G06F111/10 G06F113/06 G06F119/14 |
| A | HUHN MATTHIAS L ET AL: "Aeroelastic model validation with 8 MW field measurements", JOURNAL OF PHYSICS: CONFERENCE SERIES, vol. 2265, no. 3, 1 May 2022 (2022-05-01), XP020424572, DOI: 10.1088/1742-6596/2265/3/032058 [retrieved on 2022-05-01] * the whole document * * abstract * * section 3.3 * * section 3.4 * * figures 1,3 * * section 4.1 * * section 4.2 * * figures 4 - 8 * | 1-12 | |

TECHNICAL FIELDS
SEARCHED (IPC)

G06F

The present search report has been drawn up for all claims

| Place of search | Date of completion of the search | Examiner |
|---|---|---|
| Munich | 22 March 2024 | Rungger, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)